# EUROPEAN PATENT APPLICATION

(11) **EP 1 813 848 A2**
(43) Date of publication of application: **01.08.2007**
(21) Application number: 06254704.7
(22) Date of filing: 08.09.2006
(51) Int. Cl.: F16L 1/24

(54) **Method and apparatus for deploying pipeline**

(30) Priority: 09.09.2005 GB 0518461
(71) Applicant: Subsea 7 Ltd., Peregrine Road, Westhill Business Park Westhill, Aberdeenshire AB32 6JL (GB)
(72) Inventor: Clausen, Terje, 4033 Stavanger (NO); Henrichsen, Lars Christian, 4056 Tanager (NO); Reine, Jorgen, 4029 Stavanger (NO)
(74) Representative: Sayce, Alastair George

(57) **Abstract**

A method and apparatus (30) for deploying pipeline (10), typically an oil pipeline, in marine environments, whilst preventing pipeline damage caused by turbulent water and contact with the seafloor is provided. The apparatus (30) comprises buoyancy means (32,104), cooperable with the pipeline (10).

## Description

This invention relates to a method and apparatus for deploying pipeline. More particularly, this invention relates to a method and apparatus for the storage and transportation of pipeline between an onshore site and a marine vessel.

It is common to transport oils, liquid natural gas and other substances in subsea pipelines between production sites such as oilrigs and the land. Traditionally such pipelines enable rapid transportation of the fluids with minimum expense, once the pipeline has been put into place.

When installing such pipelines, it is common to use a specialised pipe-laying ship or reel ship, which typically comprises a length of pipeline on a large spool at the rear of the ship, from which the pipeline is uncoiled onto the seafloor. In many cases, a complete pipeline (generally of 6km to 10km, although potentially up to 40km or more) can be loaded onto a reel ship in operation. In other cases, where such pipelines can reach more substantial lengths, or are desired in greater diameters, it may not be possible to lay the pipeline in a single section as it is not possible to store the full length of pipeline on the spool of the reel ship. It might also be that several pipelines are to be installed at the same location during one campaign, thus requiring several "load-outs" of pipeline to the reel ship. Therefore the reel ship may have to return to the coast on several occasions, in order to pick up further sections of pipeline, after which it will return to the field, where it can continue to lay the subsequent lengths of pipeline.

Loading lengths of pipeline aboard the reel ship is therefore an important stage in the pipe-laying procedure. The more efficient the loading of pipeline aboard the ship, the quicker the pipe-laying process, the less time the reel ship is required, and, perhaps more importantly, the sooner the pipeline will be available for the transportation of the fluid. Reducing the transit distance for the pipe-laying ship is equally important for overall cost-reduction. Sometimes it is also a contract requirement to use local fabrication sites. Furthermore, it is extremely important to be able to load pipeline onboard the pipe-laying ship whilst eliminating or minimising the potential for damage to the pipeline.

Production of long pipelines is achieved by welding together 12m pieces of pipe in as long lengths (stalks) as possible at a dedicated spool base. When all the required lengths of the pipeline(s) are made and the time for installation has come, the reel ship arrives to spool on the pipeline. The lengths are then reeled onto the ship one by one, with a pause to weld the stalks together in-between each length.

Increasing the possible length of pipeline that can be prefabricated will reduce the length of time taken to load the vessel (at least, up to the capacity of the reel ship), as this reduces the number of time-consuming connections necessary during load-out of pipeline with the ship in port.

Equally important is to reduce the transit time for each load of pipeline. It can therefore be desirable to move the whole spool-base site (pipeline factory) closer to the location at which the pipe is being installed.

To prefabricate and store many long lengths of pipe on land, a very large (long) flat yard for pre-fabrication and storage is required. Very long fabrication sites are expensive to make and buy or rent. In addition, these long flat areas of land can be difficult to find close to the installation site. Big land-based spool bases are not a very mobile concept, as large areas of land must be prepared, even if the equipment itself might be easily transported. Consequently it would be desirable to find other ways of extending and storing the prefabricated pipeline pieces.

It would, of course, be desirable to manufacture complete pipeline lengths, as pigging, testing and commissioning could be finished before the reel ship arrives. For long pipelines the maximum length required is equal to the reel ship's maximum capacity, and if this is achieved, then no time for welding the pipeline together is needed while the ship is in port. This minimises the time that the reel vessel has to remain in port.

The pipelines could be stored on a gigantic carousel, but this is expensive to build.

Large deepwater ports may be equipped with offshore quays to simplify the procedure of uploading the pipeline onto the reel ship. Reel ships are generally large deepwater vessels which require such quays for docking and loading. It is relatively straightforward, where such facilities are available, to dock the reel ship with the quay in order to run the pipeline aboard. If repeated trips are necessary, such a situation greatly facilitates the loading process, and consequently uploads can be accomplished in commercially acceptable timescales.

Nevertheless, it is becoming increasingly desirable to lay new pipelines in areas where the local ports are not necessarily equipped with deepwater quays, and thus it is problematic to get the pipeline from the coast to the vessel in a cost effective, safe and efficient manner, as such ports do not make it possible for the reel ship to approach and take onboard pipeline. In some cases, where large diameter piping is required, or where the pipeline is relatively long, a reel ship may have to be re-loaded several times. Clearly, the further a reel ship must travel in order to be loaded and re-loaded, the greater the delay in building the pipeline, and the greater the expense.

Whilst it may be possible to upload a reel ship from the coast, without a deepwater port or quay, such practice would, in many cases, expose the pipeline to damage. It is known to use a temporary spool base, whereby the pipeline can be pulled from the coastline to the vessel for interconnection therewith, and subsequent uploading, but this system often necessitates the running of the pipeline over both land and through water, and over the seafloor. This poses a serious risk of damage to the pipeline sections because they must be dragged over the shoreline, and then across the transition zone between the coastline and out beyond the turbulent water, where the seabed is often rough, and is also exposed to strong currents and wave action.

It may be necessary to drag such pipelines for 3000m or more in order to reach the reel vessel, in particular where the angle of the seafloor is shallow, such that depth of the water nearer the shore is insufficient for the vessel to approach closely.

Dragging pipelines over the land can cause abrasion and wear damage to the pipeline. Furthermore, dragging pipelines underwater, where obstructions and obstacles are often difficult to detect and/or avoid, can also lead to damage to the pipeline. In some cases, this can render the pipeline unusable, and, in the worst cases, it can go undetected before the pipeline is completed and put into use. This problem is often exacerbated by instability of the seabed and turbulence in the water of the transition zone, which causes unpredictable movement of the pipeline as it is transferred from land to the reel ship.

As it is frequently necessary to upload the reel ship more than once, it would also be desirable to provide a system which overcomes the problems encountered when storing pipeline fabricated in long lengths, prior to uploading it onto the reel ship.

The present invention solves or mitigates at least some of the problems associated with the prior art. More particularly the present invention provides a more effective and safe system for storing and running pipeline between land and a marine vessel.

In broad terms, the present invention provides a safe and effective system for transferral and/or storage of pipeline between a shoreline and a marine vessel. In particular, the present invention reduces contact between the pipeline and the seafloor by utilising buoyancy aids to raise the pipeline off the seafloor, thereby eliminating the potential for pipeline damage.

In a first aspect of the present invention, there is provided an apparatus for preventing contact between a pipeline and a seafloor while running and/or storing said pipeline between an onshore site and a marine location, the apparatus comprising buoyancy means positionable between said onshore site and said marine location, said buoyancy means being cooperable with said pipeline.

The buoyancy means may be operable, in use, to support said pipeline remote from the seafloor, and may allow movement of said pipeline relative to the buoyancy means. The buoyancy means may remain in a substantially fixed position between said onshore site and marine location whilst the pipeline is run from said onshore site to said marine location.

In one embodiment, the pipeline is supported in use, at the surface of the body of water in which the marine location is situated. Preferably, however, the buoyancy means supports a substantial portion of the pipeline in mid-water. By "mid-water" it is meant that the pipeline is supported in a position suspended between the seafloor and the surface.

The buoyancy means may extend, in use, at least partially between said onshore site and said marine location. Typically, the buoyancy means will extend substantially from an edge of the body of water proximate the onshore site to the marine location.

In a preferred embodiment, the buoyancy means extends substantially between said onshore site, or the edge of the body of water proximate the onshore site, and a barge. The barge may be substantially anchored at or proximate to said marine location.

The barge may have a pipeline guide chute mounted thereon. The guide chute may extend longitudinally in a direction corresponding to the longitudinal axis of the pipeline. Preferably the guide chute has a first end which is, in use, submerged, and a second end which is, in use, positioned above the surface of the body of water. As such, the pipeline guide chute may support the pipeline, in use, in its transition from being submerged to above-surface, where wave motion could result in damage. Typically the barge comprises at least two flotation chambers rigidly affixed to each other, with the guide chute located therebetween.

Preferably, the guide chute is arranged at an angle substantially corresponding to the catenary of the pipeline at the position in which the pipeline exits from the body of water. The guide chute may be substantially fixed to the barge. In a more preferred embodiment, the pipeline guide chute is pivotally mounted on the barge. In this arrangement, the angle of the guide chute may vary with the catenary of the pipeline, and may allow for movement of the barge due to wave motion, thereby minimising strain on the pipeline. The guide chute is typically curved in an opposite direction to the catenary of the pipeline.

The marine location may be on the surface of a body of water. It may comprise a marine vessel, such as a reel ship, or a platform, docking station, barge or handling ship, where such a marine vessel can initiate the uploading of a length of pipeline.

Preferably, in use, the buoyancy means is maintained in a substantially linear formation. Typically this is achieved by maintaining the buoyancy means under tension along its length.

Typically, the buoyancy means is attached at a first end thereof to a location at or proximate to said onshore site. A second end of the buoyancy means is typically located at or proximate to the marine location.

In one embodiment, the first and second end of the buoyancy means are substantially affixed in their respective positions, and wherein the buoyancy means is maintained under tension along its length in this fixed position.

In a more preferred embodiment, however, the buoyancy means is placed under tension by the application of an opposing force to one or both ends of the buoyancy means. By "opposing force" it is meant a force applied to at least one end of the buoyancy means, in a direction extending away from the other end of the buoyancy means. This force may be applied by the use of a winch, thrust from a marine vessel, or the like.

In a preferred embodiment, the first end of the buoyancy means is substantially affixed at or proximate to the onshore site, and an opposing force is applied to a second end of the buoyancy means, which is moveably located at or proximate to said marine location.

The opposing force/tension may be applied by any suitable means. In a preferred embodiment, the buoyancy means is attached at the second end thereof to a barge. In this embodiment, the barge may be releasably attached to a marine vessel, such as a reel ship, for uploading pipeline to the reel ship. When the reel ship is in a position proximate the barge and is prepared to upload the pipeline, it may apply an opposing force to the barge, which in turn translates the opposing force to the buoyancy means, to maintain the buoyancy means under tension along its length. This can be done, for example, using one or more winches on the ship, or by the ship applying thrust via its own drive system. Alternatively, or in addition, the barge may have a drive system such that it can exert an opposing force on the second end of the buoyancy means. As a further alternative, the barge may have one or more winches attached thereto, which can be utilised to draw the barge towards the ship, or the buoyancy means towards the barge.

If a barge is not utilised, the marine vessel may be releasably attached directly to the second end of the buoyancy means. In this embodiment, the second end of the buoyancy means comprises means to releasably attach it to a marine vessel. In one embodiment, the buoyancy means may attach directly to one or more winches on the marine vessel. In another embodiment, the second end of the buoyancy means comprises a static attachment to the marine vessel, and the marine vessel utilises its drive system to maintain the buoyancy means under tension.

In a preferred arrangement, a pulley system is utilised to maintain the buoyancy means under tension. In this arrangement, the barge (or the second end of the buoyancy means, if the barge is not being used) has at least one pulley attachable thereto. At least one line (such as a wire, cable or rope) runs from at least one subsea anchor, through the pulley, and has a first end thereof which is releasably attachable to the marine vessel. In this arrangement, the application of force to the first end of the line by the marine vessel (via its winch or its drive system) will result in tension in the buoyancy means (as the second end of the buoyancy means is pulled toward the marine vessel) and will have a stabilising effect on the barge (and/or buoyancy means). In addition, the force applied by the marine vessel (or a winch attached thereto) will be doubled by the use of a pulley.

It is to be understood, however, that the buoyancy means may be maintained under tension by the application of force to the first end of the buoyancy means, instead of, or in addition to the application of force to the second of end of the buoyancy means. The operator will be able to assess the necessary tension in order to maintain the pipeline in the desired position in the body of the water.

The tension desired in the buoyancy means will vary depending on numerous parameters, such as the geography, length of buoyancy means, distance from onshore site to marine location, water depth, pipeline weight, etc.

Preferably, the buoyancy means further comprises a pipeline support portion, said pipeline support portion supporting said pipeline, in use. The pipeline support portion, in use, may permit linear movement of said pipeline therethrough, relative to the buoyancy means.

In one embodiment, the buoyancy means comprises at least one float.

It is preferred that the pipeline support portion comprises an opening in the or each float through which, in use, at least one pipeline can move linearly. In one embodiment, the opening is formed by a periphery of the at least one float and a hanger portion. The hanger portion may further comprise roller device, for rotation about an axis substantially perpendicular to length of the pipeline. In use, the pipeline may be suspended beneath the float, wherein the float maintains said pipeline in a location remote from the seafloor.

Preferably, the buoyancy means comprises a plurality of floats. In this arrangement, said plurality of floats are preferably in a substantially linear formation. Preferably each of said floats, other than the float at the first end and the float at the second end of the buoyancy means - the two terminal floats - is attached, by means of at least one flexible linkage, to two adjacent floats. In addition, the pipeline support portion of each float may be attached by means of at least one additional flexible linkage to the pipeline support portion of the two adjacent floats.

The first terminal float is positioned proximate the first end of the buoyancy means, and may be connected to, or anchored in proximity to the onshore site. The second terminal float is positioned proximate the second end of the buoyancy means, and may be positioned proximate or substantially affixed at the marine location. The second terminal float may be anchored to the seafloor proximate the marine location, may be connected to the barge, or may be releasably connected directly to a support vessel, platform, reel ship or other ship (e.g. a handling ship/platform), proximate the marine location. Thereby a line of floats attached by flexible linkages is formed, extending between the onshore location and the marine location.

The flexible linkage may be any suitable tethering means, such as one or more ropes, wires, chains, etc. Adjacent floats may be attached to one another by individual length(s) of flexible linkage, or a length of flexible linkage may extend the full length of the buoyancy means, having floats affixed to it at selected positions.

In one embodiment, the second terminal float is tethered to the reel ship during uploading, such that the reel ship is operable to draw out the line of said floats, and maintain said substantially linear formation of floats. Typically this is achieved by the application of forward thrust by the reel ship, in a direction away from the onshore location, to maintain tension in the linear formation of floats whilst the pipeline is simultaneously drawn onto the reel ship.

In said substantially linear formation, the pipeline, in use, may be supported by said plurality of floats, thus being prevented from sinking, or maintained in a substantially constant depth of water.

Preferably, in use, the buoyancy means maintains at least a substantial portion of the pipeline in a position suspended within the body of water. The buoyancy means may be positioned at the surface of the body of water, and may maintain the pipeline at the surface of the body of water. More preferably, however, the buoyancy means is submerged or semi-submerged in the body of water and the pipeline is suspended, submerged between the floor of the body of water and the surface of the body of water. This minimises or avoids the potentially harmful motion of waves at the surface of the body of water, and the potential for damaging contact between the pipeline and the floor of the body of water.

More preferably, in use, the buoyancy means is adapted to maintain the pipeline in a desired catenary in said body of water. Typically, the desired catenary will be an arc in the body of water between the onshore site and the marine vessel. The exact nature of the catenary will be dependent, *inter alia,* on the rigidity of the pipeline, the tension exerted longitudinally on the pipeline, the level of buoyancy of the buoyancy means, the ballast associated with the buoyancy means (as described further below), the location of the buoyancy within the buoyancy means and the tension maintained within the extent of the buoyancy means. The operator may adjust the catenary of the buoyancy means/pipeline in the body of water as appropriate depending on the condition of the floor of the body of water (e.g. the angle of the littoral region, the extent of the transition zone, the presence or absence of underwater obstructions, etc.).

In one embodiment, the buoyancy means comprises additional ballast, in order to maintain the buoyancy means in a submerged or semi-submerged position within the body of water. This enables the buoyancy means to attain an equilibrium position within the body of water, wherein the buoyancy of the buoyancy means is balanced by the negative buoyancy of the pipeline and the ballast associated with the buoyancy means. The operator may adjust the buoyancy of the buoyancy means by increasing or decreasing one of the buoyancy or negative buoyancy along the length of the buoyancy means, in order to achieve the desired position of the pipeline in the body of water.

Where the buoyancy means comprises a plurality of floats, the ballast may comprise a weight associated with one or more of said floats.

In a preferred embodiment, the or each float has a length of chain, heavy cable, or the like, attached thereto. The chain/cable/etc. may attach to the pipeline support portion. Preferably, the chain/cable/etc. attaches to the hanger portion.

Preferably the negative buoyancy provided by the ballast is variable. Preferably the variation in the negative buoyancy of the ballast is automatic, in that it varies without human intervention. Preferably, in use, the ballast contacts the seafloor. In addition, the ballast inhibits or minimises the motion of the buoyancy means, particularly if the ballast contacts the floor of the body of water.

The use of ballast, such as a length of chain, which contacts the seafloor, in use, is a preferred mechanism by which the buoyancy means achieves a natural catenary or equilibrium position in the body of water, when carrying pipeline. Adjustment in the buoyancy of the buoyancy means is automatic, in that vertical motion of the buoyancy means in the body of water will be countered by an adjustment in negative buoyancy of the ballast, as the length of ballast extending from the seafloor to the buoyancy means extends/shortens. Thus, an equilibrium position will be achieved, at which the positive buoyancy of the buoyancy means equals the negative buoyancy of the pipeline and the variable negative buoyancy of the ballast.

Typically, the equilibrium position will be a natural catenary or arc, with the first and second ends of the buoyancy means/pipeline being higher in the body of water than a central portion of the buoyancy means/pipeline.

In some embodiments, it may be desirable to adjust the vertical position of the buoyancy means or the individual floats in the body of water to achieve the desired position of the buoyancy means/pipeline in or on the water. For example, if there is a known obstruction in the body of water, or a shallow region such as a sandbank, it may be desired to raise or lower the pipeline away from the natural catenary, to provide a modified catenary or the like, along some or all of its length. This can be done by adjusting the amount of ballast associated with the buoyancy means along its length, such as by adjusting the size/weight of chain attached to the or each float. Alternatively, or in addition, the buoyancy of the float may be adjusted by adjusting the buoyancy of the buoyancy means, such as by increasing/decreasing the volume of air stored in the buoyancy means or adding/removing additional floats to/from the buoyancy means. In another embodiment, the length of the hanger portion of the or each float may be increased/decreased in order to permit the position of the pipeline in the body of water to be adjusted. In this embodiment, the buoyancy means could be maintained in a substantially linear formation and the catenary of the pipeline could be adjusted by varying the length of the hanger portion attached to the or each float.

The buoyancy of the pipeline itself can be utilised to reduce the required buoyancy provided by the buoyancy means (i.e. a reduction in the number or volume of said buoyancy means). In some circumstances, the seaward end of the pipeline can be sealed, and the pipeline filled with a material less dense than (sea)water, such as air. Air may be pumped through the pipeline, in order to maintain its buoyancy.

Where the length of pipeline which extends between the onshore site and the edge of the body of water is significant, it may be necessary to provide additional means (additional to the equipment at the marine location) to draw the pipeline from the onshore site to the body of water. This may be required where winding the pipeline onto the reel of a reel ship or barge would exceed the capabilities of the reel ship/barge, or would overstress the pipeline itself. Thus, in one embodiment, the apparatus further comprises means to withdraw the pipeline from the onshore site. Said means may preferably provide sufficient tension on said pipeline in a direction away from said onshore site to overcome the friction load of said pipeline on said onshore side (i.e. between the onshore site and the edge of the body of water). Preferably said means comprises a tensioner. Typically said means is located proximate to the onshore site.

Thus, the invention provides a connected buoyancy means which is easily transported and set in place, and may be positioned in virtually any body of water. The apparatus enables rapid and secure transportation of pipeline from the onshore site, which will typically be a spool base, or the like. The chain of connected buoyancy means typically stretches from the land, through the turbulent water to the more tranquil deep water where a reel ship can safely approach and upload pipeline. The chain of connected buoyancy means provides a safe extension to the spool base, and is a mobile concept that can be transported and installed relatively rapidly and economically. It can also be put in place outside a small local spool base to make it possible to reach a reel ship, and enables storage of long lengths of fabricated pipe before the reel ship arrives. A handling ship/platform may pull out the pipeline to its decided length and have the first pipeline end ready for the reel ship to load onto the reel, and is usually present until the reel ship has connected to the pipe and apparatus. Typically the reel ship will be connected to the second terminal float of the apparatus during uploading. Once the reel ship has been loaded and departs, the handling ship/platform may be reconnected to the chain of buoyancy means, to maintain the chain in formation.

In another embodiment of this aspect of the invention, the buoyancy means comprises at least one pontoon, said at least one pontoon extending, in use, at least partially between said onshore site and said marine location.

Preferably the or each pontoon comprises at least first and second buoyant rafts, the first and second rafts being conjoined and separated from one another, having a pipeline support portion located therebetween.

In one embodiment, the or each pontoon comprises six rafts, disposed in two substantially parallel lines of on three rafts on opposite sides of the pontoon.

The rafts may be conjoined by tethering. Preferably, however, the rafts are conjoined substantially rigidly, such that the distance of separation therebetween is relatively constant, during normal use.

The pipeline support portion may be any means capable of supporting said pipeline, in use, as said pipeline is drawn longitudinally along the length of the pipeline support section, between said at least first and second rafts. For example, the pipeline support portion may comprise one or more beams extending, preferably transversely, between said at least first and second rafts. In one preferred embodiment, the pipeline support section comprises a pipeline storage area, whereby lengths of pipeline may be stored between said at least first and second rafts. Preferably said pipeline support portion is capable of supporting said pipeline, in use, as said pipeline extends at least partially between said onshore site and said marine location, and/or as said pipeline is drawn along the length of the pipeline support section, between said first and second rafts.

Said pipeline support section may comprise a surface having a low coefficient of friction, adapted to permit said pipeline to be drawn lengthwise between said first and second rafts. In one preferred embodiment, the pipeline support section may comprise at least one roller means. The or each roller means may comprise an axle at least partially traversing said pipeline support portion between said at least first and second rafts, and a roller rotatable about said axle. The axle preferably extends substantially perpendicularly from said first and second rafts.

The pipeline support section of the or each pontoon may comprise a plurality of said roller means, disposed substantially linearly between the first and second rafts.

A plurality of rollers may rotate about the or each axle, and may be oriented such that multiple pipelines can be supported, in parallel, on said pipeline support section.

The or each roller may be substantially cylindrical, but are preferably adapted to cooperate, in use, with a substantially cylindrical pipeline, to reduce lateral movement of the pipeline. Preferably the rollers are adapted to centralise said pipeline on said roller. In one preferred embodiment, the or each roller is substantially hourglass shaped, having a narrowed-diameter central section, and increased diameter end sections. In another embodiment, the roller is comprised of two substantially spherical rollers, such that, in use, the pipeline is supported between said spherical rollers. Several spherical rollers could be positioned about the same axle, wherein each spherical roller supports two lengths of pipeline.

In one embodiment, the pipeline support section further comprises pipeline storage means. This may comprise an area adjacent to said roller means upon which a length of pipeline can be stored whilst the rollers means are occupied by a second length of pipeline. The pipeline storage means is preferably oriented such that lengths of pipeline can be transferred from said pipeline storage means to said roller means. In one embodiment, the pipeline storage means may be angled toward the roller means, such that a second length of pipeline can readily be transferred onto the roller means when the first length of pipeline has been uploaded. The pipeline storage means may be comprised of additional roller means.

Preferably, the apparatus comprises a plurality of said pontoons, connected in series, and extending, in use, substantially between said onshore site and said marine location. In this arrangement, said plurality of pontoons are preferably arranged in a substantially linear formation, such that said pipeline support sections of each pontoon also extend in a substantially linear formation.

Preferably, in this formation, each of said pontoons, other than two pontoons at the termini of said linear formation, is attached, by means of at least one flexible linkage, to two adjacent pontoons.

Preferably, in this formation, a first of said terminal pontoons may be connected to, or anchored in proximity to the onshore location. A second of said terminal pontoons may be positioned proximate to or substantially affixed at the marine location. The second terminal pontoon may be anchored to the seafloor proximate the marine location, or may be connected to a support vessel, platform, reel ship or other ship (e.g. a handling ship/platform), proximate the marine location. Optionally this vessel can apply a tension to the buoyancy means via its own thrust mechanism, via a winch, etc..

The flexible linkage may be any suitable tethering means, such as rope, wire, chain, etc.

In said substantially linear formation, the pipeline, in use, may be supported between the rafts of said plurality of pontoons, thus being prevented from sinking, or maintained in a substantially constant depth of water. The pipeline may extend, in this position, substantially between said onshore location and said marine location, being supported by said pontoons.

In said substantially linear formation the pontoons may be separated from one-another, at a distance which may be dependent on the depth of water.

In one embodiment, the pontoons are in close proximity to one-another, and the apparatus further comprises a walkway on a surface of said pontoons. The walkway may extend substantially the length of the linear formation. The walkway may be formed from an upper surface of the rafts.

In use, at least one pipeline is positioned extending from the onshore location, typically a spool base, to the marine location, which is typically a reel ship or platform, the pipeline being supported on the pipeline support section of the pontoon(s). The pipeline support section enables the pipeline to be drawn from the onshore location to the marine location rapidly, whilst minimising the potential for damage by protecting the pipeline from harmful wave action (the rafts can prevent waves breaking on the pipeline) and supporting the pipeline on or near the surface of the sea, thereby preventing contact between the pipeline and the seafloor. Multiple lengths of pipeline may also be stored in said pipeline support section, to enable rapid uploading of pipeline. This embodiment is typically somewhat more permanent than the previously described embodiment using buoyancy means comprised of floats. It may support and enable the production of longer pipe lengths, and may extend a greater distance from the spool base.

In another aspect of the invention, there is provided a method for transferring a pipeline from an onshore site to a marine location, which method comprises the steps of: positioning at least one buoyancy means in a body of water between said onshore site and said marine location; and running said pipeline from said onshore site to said marine location while said pipeline is in cooperation with said buoyancy means.

The buoyancy means is preferably adapted to prevent contact between said pipeline and a floor of said body of water.

The method may further comprise the step of maintaining the buoyancy means in a substantially linear formation. This may comprise applying a tensional force to one or both ends of the at least one buoyancy means.

The step of running the pipeline from the onshore site to the marine location may comprise connecting the pipeline to a marine vessel located at said marine location. The pipeline may thereby extend substantially between the onshore site and the marine location. The pipeline can then be drawn towards and onto the marine vessel.

The method may further comprise exerting a tensional force on an end of said pipeline, in order to run said pipeline toward said marine location. The method may also comprise the step of exerting tension on said pipeline in the direction of the marine location, at or proximate to said onshore location. This will reduce the required "pull" on the pipeline which is required to be exerted at the marine location.

Preferably the step of positioning at least one buoyancy means in said body of water comprises positioning a plurality of said buoyancy means extending from said onshore site to said marine location in a substantially linear formation.

Preferably the marine location is sufficiently far from the shoreline such as to be beyond the transition zone of turbulent water, and is preferably deep enough for safe access by said marine vessel.

Sections of pipeline may be welded or otherwise joined together proximate the onshore site to form a substantially continuous pipe onshore, such that said pipeline can be substantially continuously drawn from the onshore site to the marine location.

The method may further comprise the step of drawing an end of said buoyancy means from said onshore site to said marine location. The method may further comprise the step of anchoring said buoyancy means in a position extending substantially between said onshore site and said marine location.

Preferably, the at least one buoyancy means accords to the abovedescribed invention.

The abovedescribed method may also be utilised for the temporary storage of pipeline, and is equally applicable for running pipeline from an marine location to an onshore site.

In another aspect of the invention there is provided an apparatus for protecting a pipeline while running said pipeline from an onshore site to a marine location in a body of water, which apparatus comprises a carrier tubing, said carrier tubing in use at least partially surrounding the pipeline, said pipeline being longitudinally moveable through said carrier tubing, and at least one buoyancy means in cooperation with said carrier tubing, said buoyancy means maintaining, in use, at least part of the carrier tubing remote from a floor of the sea.

Preferably the apparatus comprises a plurality of buoyancy means. The plurality of buoyancy means are preferably distributed along at least part of the length of the carrier tubing.

The carrier tubing may have a first end proximate said onshore site, and a second end proximate said marine location, and the at least one buoyancy means may be located proximate to, and/or cooperate with, the second end of the carrier tubing, such that, in use, at least the second end of the carrier tubing is maintained remote from the seafloor.

Preferably the first end of the carrier tubing rests, in use, on the floor of the body of water, and the second end of the carrier tubing is suspended, in use, remote from the floor of the sea.

The buoyancy means may be integral with said carrier tubing, or may be connected thereto by tethering means.

Preferably said carrier tubing provides a protective tubing, which may be operable to protect the pipeline from damage.

Preferably said carrier tubing extends substantially from said onshore site at least as far as said body of water. More preferably, the carrier tubing extends into said body of water. More preferably still, the carrier tubing extends substantially as far as the transition zone. Most preferably, the carrier tubing extends beyond the transition zone. The transition zone being a zone of water inshore in which the turbulence of the water is sufficient to be problematic to the integrity of the pipeline. It is generally a zone of water adjacent to the coastline where the seabed tends to be relatively rough, there is often wave action, and there are strong currents.

A liner may be disposed between said pipeline and said carrier tubing. The liner preferably provides an additional protective tubing for the pipeline, and may also provide a low-friction surface to reduce the axial force required to draw the pipeline through the carrier tubing.

The liner is preferably a low-friction tubing. In this manner, the liner tubing overlies the pipeline in use, and provides protection for said pipeline, in terms of reduced friction between said pipeline and said carrier tubing, thereby reducing abrasion, pull-through loads and impact damage caused to the pipeline by contact with the carrier tubing. Preferably the liner tubing also extends a distance away from the onshore site beyond the end of the carrier tubing, such that it may reduce abrasion and impact damage caused to the pipeline by contact with the periphery of the carrier tubing end when the pipeline is removed from the carrier tubing, and also when the reel ship drifts out of alignment with the longitudinal axis of the apparatus. The liner tubing also has a reduced coefficient of friction, such that the pipeline may move relatively freely within it and optionally also the carrier tubing without substantial resistance. The liner tubing may be made from any material which is able to provide a low-friction contact with the carrier tubing and the pipeline. Typically, the liner tubing will be plastic, such as polyethylene. The liner, or sections thereof, may comprise mechanical means to reduce the friction between the pipeline and the carrier tubing. For example, the liner tubing may comprise internal rollers or wheels to ensure low friction between the liner and the pipeline, and optionally also between the liner and the carrier tubing. The rollers/wheels may contact the pipeline and/or may contact the carrier tubing. The liner may be perforated.

Preferably, the liner tubing is extendable within the carrier tubing, and may be drawn through said carrier tubing, for the purposes of installation within said carrier tubing.

The first end of the carrier tubing, in use, may contact the floor of the body of water. At least the second end of the carrier tubing is held, in use, above the floor of the sea. Thus, at least the first end carrier tubing is preferably manufactured from a material suitable to resist wear, abrasion and impact damage with the seafloor caused by movement due to the turbulence of water in the inshore area, and suitable to resist the abrasive forces which may be caused when laying the apparatus on the shoreline and into the sea on the seabed. The second end of the carrier tubing may be manufactured from a different material, having a reduced mass, as the resistance to wear is less important, and the requirement for buoyancy is more important.

At least the first end of the carrier tubing is preferably manufactured from a suitably dense material such that it provides ballast to the apparatus, in order to limit or prevent excessive movement in turbulent waters in the transition zone in the proximity of the shoreline, or cross-currents acting in the transition zone or beyond.

In one embodiment, the carrier tubing comprises a steel tubing. In another embodiment, the carrier tubing comprises a concrete tubing. In one embodiment, at least the first end of the carrier tubing comprises a steel tubing with a concrete layer on the outer side.

The carrier tubing may be extended from the onshore site to a selected distance into the body of water from the shoreline. Preferably this distance is far enough that potentially damaging turbulent effects of inshore waters are minimised, and is also far enough that the marine vessel is able to safely approach and pick up the pipeline. This distance will depend substantially upon the geographical nature of the shoreline, but will typically range from 100m to 10000m, and more particularly from 500m to 1500m or 500m to 1000m.

In one embodiment, the carrier tubing and said buoyancy means are integral. Preferably, the second end of said carrier tubing have a greater buoyancy than the first end.

The buoyancy of the carrier tubing, particularly at the second end, is preferably adjusted such that the catenary of the carrier tubing approximates towards the reel ship, in use. This not only avoids contact of the pipeline with the sea floor, but further reduces friction when drawing the pipeline through the carrier tubing.

In another aspect of the invention, there is provided a method for transferring pipeline from an onshore site to a marine location in or on a body of water, which method comprises the steps of: running a pipeline through a carrier tubing to said marine location, wherein said carrier tubing has a first end proximate an onshore position, a second end in said body of water, and extends therebetween, and wherein the carrier tubing comprises buoyancy means operable to maintain at least the second end of said carrier tubing remote from a floor of the body of water.

In some circumstances, where a pipe friendly environment prevails, the potential for pipeline damage is reduced, and it may be possible to pull the pipe out on the seabed. The term "pipe-friendly environment" is intended to confer a flat and comparatively soft seabed (typically sand and/or clay), preferably where there exists relatively insignificant current and waves. However, even in such circumstances, the pipeline is likely to be exposed to some friction and may be damaged.

Thus, in another aspect of the present invention, there is provided a method for running a pipeline through a body of water having a floor, comprising the steps of preparing a pipeline track on the floor of the body of water by inspecting said pipeline track for rock and debris which may be harmful to the integrity of the pipeline, removing any such rock and debris, and dragging said pipeline across the prepared pipeline track.

Typically the pipeline will require a protective coating of some nature to prevent friction damage.

Thus, the method may further comprise the step of coating said pipeline with a protective coating prior to said dragging step.

Preferably the pipeline track will extend substantially from an onshore site, such as a spool base/weld station, to a marine location, which may be proximate a reel ship.

The method may further comprise laying friction reducing means substantially along the length of the track. Suitable friction reducing means include materials having a low coefficient of friction, or roller devices.

In another aspect of the invention there is provided a protected pipeline for movement across land or seabed, the protected pipeline comprising an internal pipeline substantially surrounded by a protective coating. The protective coating may comprise a polymeric coating.

The pipelines referred to herein may be any pipeline suitable for transporting fluids, such as water, hydrocarbons (liquid or gaseous), etc.

It is to be understood that this invention is also advantageous in all circumstances where it is desirable to transport and/or store pipeline between an onshore site and a location in or on a body of water. Accordingly, the present invention is also applicable when laying a semi-permanent pipeline for interconnection between, for example, an ocean-going vessel such as an oil tanker and a land mass, when initially laying a more permanent pipeline for interconnecting a production facility to a coastline, when interconnecting two land masses across a volume of water, or generally when laying of pipelines between land and sea, where it is desirable to protect the pipeline in the transition zone between land and deepwater.

For example, it may be desirable to lay a semi-permanent pipeline between a coastline and an offshore site. In such circumstances, the pipeline could be drawn out from an onshore site to said offshore site, protected in a manner as described above.

It will also be appreciated that any of the above described embodiments of the invention may be used in combination with one or more of the other embodiments of the invention. Reference is now made to the accompanying drawings, in which:
Figure 1A is a plan view of a first embodiment of an apparatus according to the present invention;
Figure 1B is a side elevation of the embodiment of Figure 1A;
Figure 1C is a side elevation of a float of a buoyancy device of the embodiment of Figure 1A;
Figure 1D is a side elevation of a float of a buoyancy device of the embodiment of Figure 1A, taken along the line D-D of Figure 1C;
Figure 2A is a plan view of the embodiment of Figure 1A, in which a marine vessel is moored in a "load-on" configuration;
Figure 2B is a side elevation of the stem of the marine vessel of Figure 2A in a "load-on" configuration;
Figure 3A is a side elevation of a second embodiment of the present invention;
Figure 3B is a close-up view of the offshore end of the embodiment of Figure 3A;
Figure 3C is a view of a buoyancy device of the embodiment of Figure 3A taken along the line C-C of Figure 3B;
Figure 3D is a plan view of a buoyancy device of the embodiment of Figure 3A;
Figure 4A is a side elevation of a third embodiment of the present invention;
Figure 4B is a close-up view of the offshore end of the embodiment of Figure 4A;
Figure 5A is a side elevation of a fourth embodiment of the present invention;
Figure 5B is a closer view of the offshore end of the embodiment of Figure 5A;
Figure 5C is a cross-sectional view of the embodiment of Figure 5A, taken along the line 4-4. The Figures are not drawn to scale.

In the context of the present invention, the term "marine" is intended to relate to any body of water, be it an ocean, lake, reservoir, river etc. Likewise, any reference to the "seafloor" is intended to encompass the bottom of any body of water, including lakes, estuaries, etc..

The term "float" as used herein refers to a buoyancy-providing device, i.e. an object having a density less than that of sea or fresh water. "Float" as used herein is also not to be construed as being limited to objects which reside at the surface of the body of water, and thus includes submerged or semi-submerged buoyancy means.

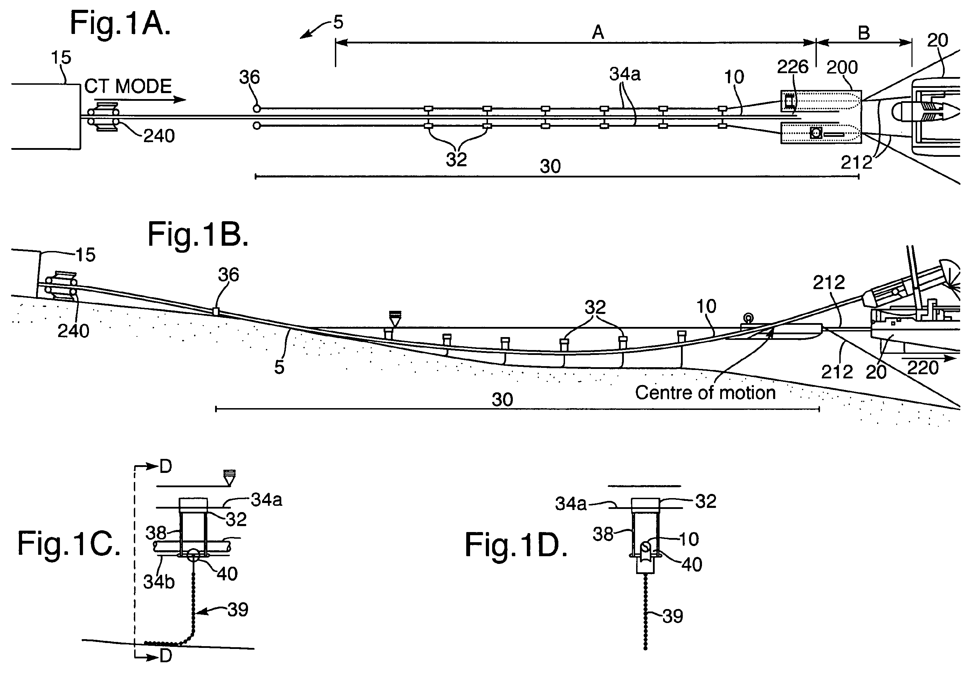

With reference to Figure 1A and 1B, a pipeline 10 is constructed in a location proximate a coastline 5. The location is typically a spool base 15 comprising a weld station in which lengths (stalks) of pipeline are connected into a semi-continuous pipeline 10. When it is desired to upload the pipeline 10 onto the reel ship 20, an apparatus 30 according to the present invention is extended between the spool base 15 and the reel ship 20. The apparatus 30 consists of a series of floats 32, connected in a line by cables 34a. The cables 34a extend from piles 36 proximate the spool base 15 to a barge 200.

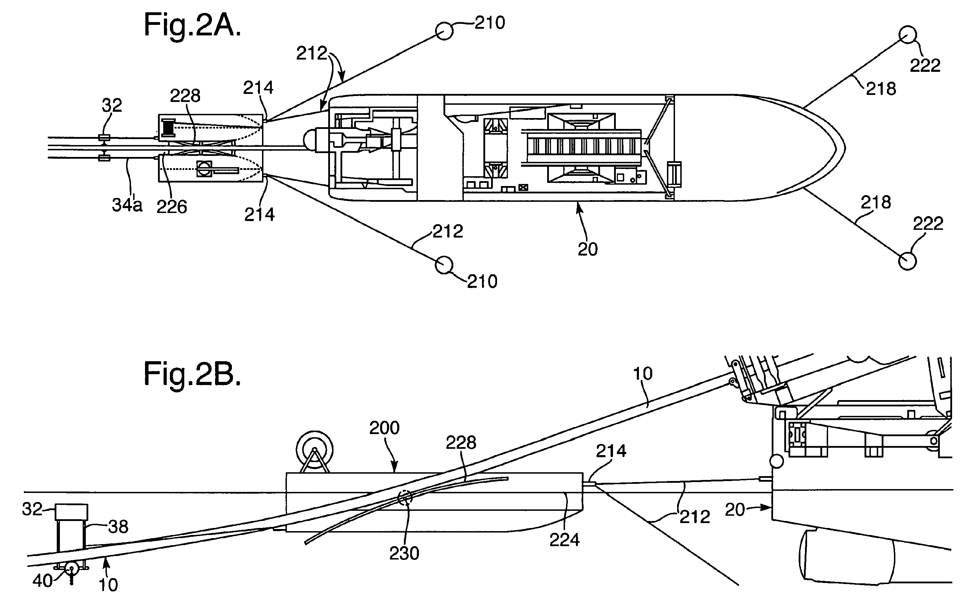

With reference to Figure 2A, the barge 200 is anchored to undersea piles 210 by cables 212. Cables 212 run through a pulley means 214 at an end of the barge and are releasably attached to the stem of the reel ship 20. The reel ship 20 applies a thrust in the direction of arrow 220, thereby drawing the cables 212 through the pulley means 214. In the depicted embodiment, the cable tension is approximately 15-25t. In addition, cables 218 extend from the prow of the reel ship 20 and are tethered to undersea piles 222. It is to be understood, however, that the invention is also suitable where there are no undersea piles - i.e. where the reel ship and/or barge are not anchored in place. In addition, rather than the reel ship 20 applying thrust, instead or in addition a tensional force could be exerted on the buoyancy means using a winch mounted on the barge 200 or the reel ship 20.

The tension applied by the reel ship maintains the barge 200 and buoyancy apparatus 30 in a substantially linear formation, wherein the tension in the wire is typically between approximately 20t and 40t. In the depicted embodiment of Figures 1A to 1D and Figures 2A and 2B, the distance represented by the letter A, from the coastline 5 to the barge centre of motion, is approximately 1,500m. The distance represented by the letter B, between the barge centre of motion and the stem of the reel ship 20, may be varied to suit the required pipe-laying parameters.

The barge 200 is shown in further detail in Figure 2B. It comprises a buoyant body 224 having a channel formed therein for passage of the pipeline 10. Positioned within the channel 226 is a guide chute 228 for supporting the pipeline as it is raised above the sea surface. The guide chute 228 is pivotally mounted within the channel 226 at a pivot 230 to enable the angle of the guide chute 228 to adapt to the swell in the water and the angle of the pipeline 10 as it exits the water.

With reference again to Figures 1A and 1B, a pipeline tensioner 240 is located proximate the spool base 15. The tensioner 240 applies a force to the pipeline 10 to draw the pipeline 10 away from the spool base 15. It is to be understood that the use of a tensioner 240 is not essential. However, when the distance between the spool base 15 and the reel ship 20 is significant, the tension required to be applied by the reel ship 20 in order to pull the pipeline 10 unaided thereto may exceed the "load-on" power of the reel ship 20, or may lead to damage in the pipeline 10 or other equipment. Thus, in some circumstances, it is preferable to utilise an additional withdrawal means, such as the tensioner 240, which overcomes the resistance/drag on the pipeline at the onshore end of the apparatus.

With reference now to Figure 1C, each float 32 comprises a hanger 38, which in ordinary use will be suspended beneath the float 32 by the force of gravity. The hanger 38 comprises two arms, with a roller 40 carried between the two arms. Roller 40 is freely rotatable with the movement of the pipeline 10. The pipeline 10 is therefore suspended, submerged. In use, the float 32 may be submerged or semi-submerged. In the depicted embodiment, the floats 32 have a length of chain 39 attached to the hanger 38. Under gravity the chain 39 hangs beneath the float 32. Typically an end of the chain 39 will be in contact with the seafloor. The length of chain 39 acting as ballast will depend upon the vertical height of the float in the body of water. The buoyancy of the floats 32 thereby naturally varies to achieve the desired catenary of the pipeline, such that the float 32 achieves an equilibrium position in the water. As it is the natural tendency of the pipeline 10 to sag at the midpoint, the floats proximate to the pipeline midpoint will therefore be at the lowermost vertical position in the body of water, and will have the shortest lengths of chain 39 acting as negative buoyancy.

It is to be understood, however, that the desired position in the water can be obtained otherwise, such as by adjusting the buoyancy of the float 32 - for instance by adjusting the quantity of air in the float 32, adding or removing floats 32 to the apparatus 30, etc..

The chain 39 being in contact with the seafloor also inhibits movement/drift of the apparatus 30 when there is reduced tension in the cables 34a, such as when the reel ship 20 is not moored/attached.

In the depicted embodiment, the hanger 38 is connected to adjacent hangers by cable 34b, to provide a increased level of rigidity along the length of the apparatus 30.

In order to extend apparatus 30, a marine vessel such as the reel ship 20 draws the cable 34 from the shore, thereby drawing the line of floats 32 toward the desired marine location. The apparatus is then anchored in its extended position, via cables 212 extending from the barge 200 to the piles 210.

When it is desired to upload the reel ship 20, the ship 20 manoeuvres into the position depicted in Figure 2A, and is anchored to piles 222. In addition, the reel ship 20 may maintain a thrust in a direction away from the spool base 15.

An end of said pipeline 10 is attached to the reel of said reel ship, and the pipeline 10 may be wound onto said reel 24 by the rotation of the wheel 24, which applies an axial force to the pipeline 10. The tensioner 240 may be utilised to provide additional tension at the onshore end. At the offshore end, movement of the pipeline 10 may be aided by the use of rollers (not shown) mounted between the onshore site 15 and the coastline 5. In the water, the pipeline 10 will move freely across the rollers 40 and may be drawn out from the coastal location by the application of the axial force applied by the rotation of the reel 24, combined with the drive of the tensioner 240.

When the reel ship 20 has uploaded sufficient pipeline 10, the pipeline 10 may be cut at the reel ship end. The apparatus 30 may be left anchored to the seabed, or retracted to the spool base 15.

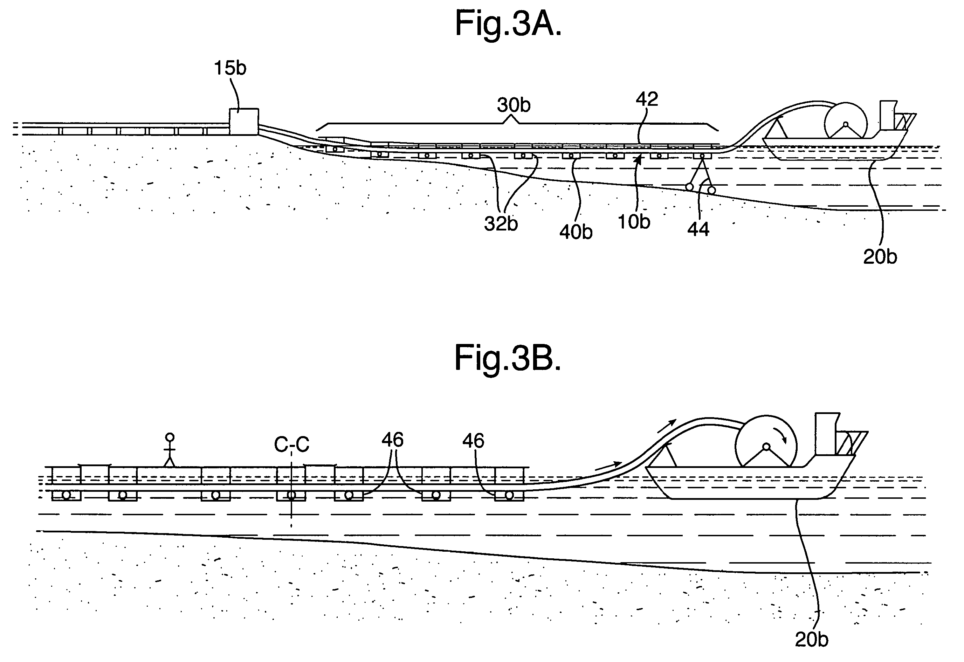

With reference now to Figure 3A and 3B, an alternative embodiment of the present invention is shown, with like parts designated by the suffix "b". This apparatus 30b comprises multiple jetty elements or pontoons 32b, in place of the floats 32 in the abovedescribed embodiment, each pontoon 32b being attached to the immediately adjacent pontoons 32b via a wire 34b, or optionally a semi-rigid connection means. Pontoons 32b extend in a line from the spool base 15b to a position beyond turbulent water, where the reel ship 20 can safely upload pipeline 10b. The ends of apparatus 30b are connected to the coast, proximate the spool base 15, and anchored to the seabed, by means of an anchor 44, respectively.

As shown in Figure 3B, each pontoon 32b comprises three rafts 46, spanned by a walkway 42, which enables personnel to walk on said pontoons 32b and inspect the pontoons 32b and/or the pipeline 10, although it will be appreciated that the number of rafts 46 can be varied.

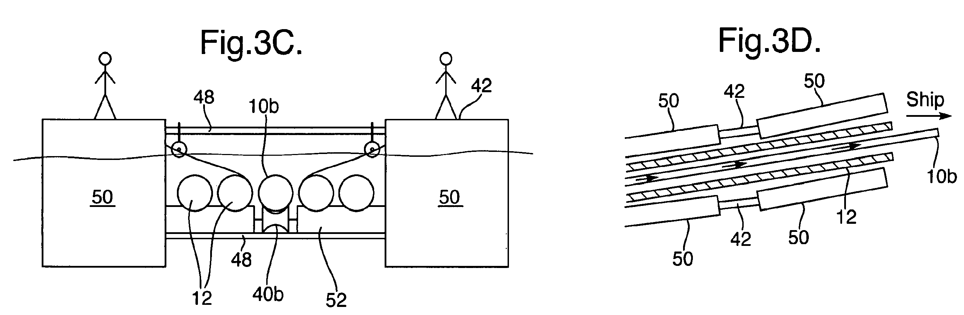

With reference now to Figures 3C and 3D, each raft 46 can be seen to comprise two tanks 50, separated by beams 48, which maintain a relatively fixed distance between said tanks 50. Positioned substantially centrally between the tanks 50 is a roller 40b, supporting the moving pipeline 10b. Further pipeline 12 may be stored for subsequent uploading onto the reel ship 20 on pipeline storage sections 52.

In use, the pipeline 10 is drawn onto the reel ship in substantially the same manner as previously described in relation to Figures 1A-D and 2A-B. This apparatus 30b enables rapid uploading, as multiple lengths of pipeline, can be stored, whilst moving pipeline 10b is uploaded, and stored pipeline 12 can then be transferred to rollers 40b after moving pipeline 10b has been uploaded. Apparatus 30b can be fixed in position, semi-permanently, and can be left in position awaiting the return of the reel ship 20.

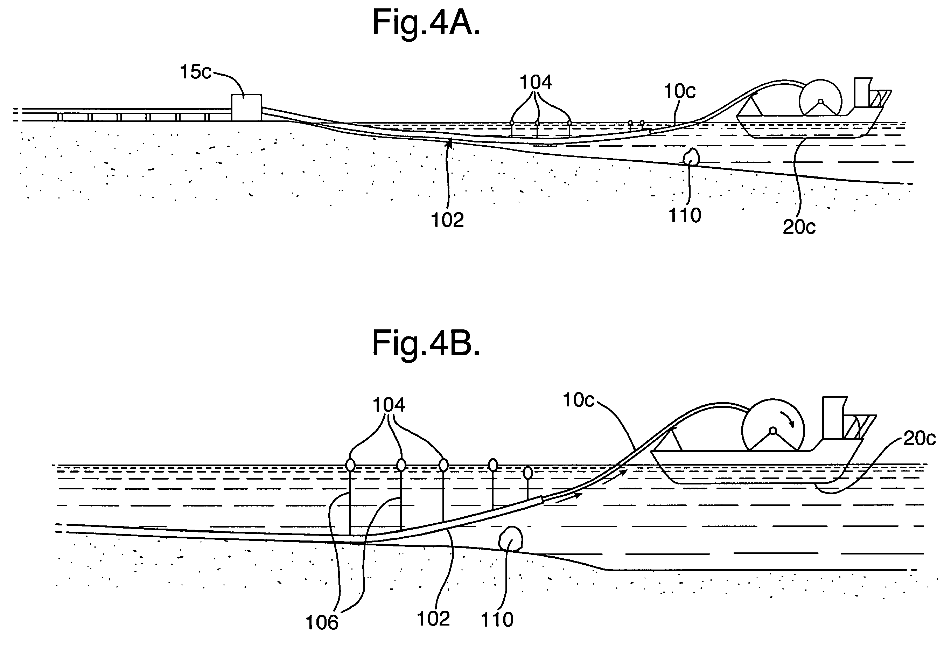

A third embodiment of the invention is now described with reference to Figures 4A and 4B, with like parts designated with the suffix "c". A pipeline 10c extends internally within a protective carrier tubing 102 which has first and second ends. The first end of the carrier tubing 102 is generally attached at or proximate to the welding station 15c on the shoreline. The second end of tubing 102 extends towards the body of water, and when first put in place, may be extended from the welding station 15c by applying a tensioning force to said second end of said tubing 102, via a launch (pull) wire (not shown) or other suitable means. Carrier tubing 102 extends substantially beyond the transition zone, into relatively calm deepwater.

Carrier tubing 102 overlies the internal pipeline 10c for substantially the area covered by the shoreline and the transition zone between the shoreline and relatively still water, in which turbulent waters will exert substantial forces on the tubing. The tubing 102 provides ballast weight to prevent excessive movement in the transition zone, and also provides exterior protection, to protect the pipeline 10c from abrasion and contact damage.

In this manner, there is little or no contact between the pipeline 10c and the seabed or the shoreline.

Distributed proximate the second end of the steel tubing 102 are a plurality of floats 104, attached to the exterior of steel tubing 102 by wire tethers 106. Tethers 106 decrease in length towards the second end of tubing 102, such that the second end of the tubing 102 is raised off from the surface of the seabed, and away from obstructions 110.

Pipeline 10c is withdrawn from the spool base 15 through the carrier tubing 102, and is angled upwardly towards the reel ship 20c, thereby avoiding contact with the seafloor, and reducing the potential for damage that such contact entails.

When the transfer operation is complete, the carrier tubing 102 can be pulled back to shore, ready for re-use. It may also be retained in position in which case the end will be capped to prevent ingress of dirt or debris which could block the liner, or damage the product pipe when it is drawn through it.

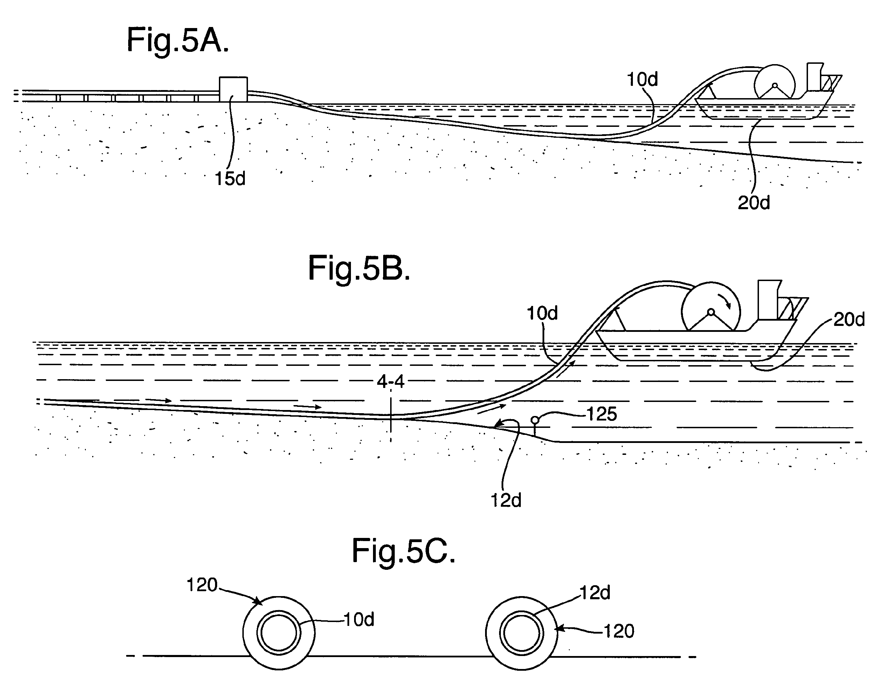

A fourth embodiment of the invention is depicted in Figures 5A, 5B and 5C, with like parts designated with the suffix "d". A track is prepared on the seafloor by clearing debris, rocks and other obstructions from the seafloor. The pipeline 10d is then drawn from the spool base 15d along the track. The pipeline 10d may be drawn initially onto said track by attaching a pull wire (not shown) to an end of the pipeline 10d, and applying tension to the pull wire. Once the end of the pipeline 10d has been attached to a reel on the reel ship 20d, however, the reel ship 20d may continue to upload said pipeline 10d. Stored pipeline 12d may also be drawn out and left on the track on the sea floor, ready for subsequent uploading onto the reel ship 20d. The end of said stored pipeline 12d may be closed, to prevent ingress of debris. A float 125 may mark the end of stored pipeline 12d, to enable subsequent pickup.

It will be appreciated that the invention described above can be modified.

## Claims

1. Apparatus for preventing contact between a pipeline and a seafloor while running and/or storing said pipeline between an onshore site and a marine location, the apparatus comprising buoyancy means positionable between said onshore site and said marine location, said buoyancy means being cooperable with said pipeline.

2. Apparatus according to claim 1, wherein the buoyancy means is operable, in use, to suspend said pipeline remote from the seafloor.

3. Apparatus according to claim 1 or 2, wherein the buoyancy means is operable, in use, to suspend said pipeline in mid-water.

4. Apparatus according to claim 1, 2 or 3, wherein the buoyancy means permits longitudinal movement of said pipeline relative to said buoyancy means.

5. Apparatus according to any preceding claim, wherein the buoyancy means extends, in use, substantially linearly, substantially between the onshore site and the marine location.

6. Apparatus according to claim 5, wherein the buoyancy means is maintained under tension along its length.

7. Apparatus according to claim 5 or 6, wherein a first end of the buoyancy means is substantially affixed at a location at or proximate to the onshore site, and the second end of the buoyancy means is releasably affixed at a position at or proximate to the marine location.

8. Apparatus according to claim 5, 6 or 7, wherein the buoyancy means is attached, at a second end thereof, to a barge, and wherein said barge is substantially anchored at or proximate to said marine location.

9. Apparatus according to claim 8, wherein the barge is releasably attachable to a marine vessel.

10. Apparatus according to claim 5, 6 or 7, wherein the buoyancy means is releasably attachable, at a second end thereof, to a marine vessel.

11. Apparatus according to any preceding claim, wherein the buoyancy means comprises at least one float.

12. Apparatus according to claim 11, comprising a plurality of said floats.

13. Apparatus according to claim 11 or 12, wherein the or each float comprises at least one pipeline support portion, said pipeline support portion supporting said pipeline in use, and allowing said pipeline to move linearly therethrough.

14. Apparatus according to claim 13, wherein the pipeline support portion comprises an opening through which, in use, a pipeline can be passed, wherein the opening is formed by a periphery of the at least one float and a hanger portion.

15. Apparatus according to claim 14, wherein the hanger portion further comprises a roller device.

16. Apparatus according to any of claims 11 to 15, wherein at least of one said one or more floats further comprises ballast.

17. Apparatus according to claim 16, wherein said ballast has a mass, and wherein the mass of said ballast acting against the buoyancy of the float varies dependent on a vertical position of the float in a body of water in which the marine location is situated.

18. Apparatus according to any claim 17, wherein the mass of said ballast acting downwardly against the buoyancy of the float varies automatically.

19. Apparatus according to any preceding claim, wherein, in use, the pipeline assumes a catenary when run or stored on said buoyancy means between said onshore site and marine location.

20. A method for transferring a pipeline from an onshore site to a marine location, which method comprises the steps of: positioning at least one buoyancy means in a body of water between said onshore site and said marine location; and running said pipeline from said onshore site to said marine location while said pipeline is in cooperation with said at least one buoyancy means.

21. A method according to claim 20, further comprising the step of maintaining the buoyancy means in a substantially linear formation.

22. A method according to claim 21, wherein the step of maintaining the buoyancy means in a substantially linear formation includes the step of applying tension to one or both ends of the at least one buoyancy means.

23. A method according to claim 20, 21 or 22, wherein the step of running the pipeline from the onshore site to the marine location comprises connecting the pipeline to a marine vessel at said marine location, such that the pipeline extends substantially between said onshore site and said marine location, and drawing the pipeline towards and onto the marine vessel.

24. A method according to claim 20, 21, 22 or 23, further comprising the steps of welding or otherwise joining sections of pipeline proximate the onshore site to form a substantially continuous pipeline onshore, and drawing said pipeline substantially continuously from the onshore site to the marine location.

25. The use of an apparatus according to any of claims 1 to 20, to store a pipeline extending between a position proximate a coastline and an offshore position.

26. The use of an apparatus according to any of claims 1 to 20, to protect pipeline whilst running said pipeline between an onshore location and a marine location.
